# FASCICULE DE BREVET EUROPEEN

(11) **EP 4 499 430 B1**
(45) Date de publication et mention de la délivrance du brevet: **21.10.2026**
(21) Numéro de dépôt: 23707782.1
(22) Date de dépôt: 01.02.2023
(51) Int. Cl.: B60K 6/387, B60K 1/00, B60K 6/448, B60W 10/02, B60W 10/119, B60W 10/26, B60W 20/15, B60W 20/40, H02K 9/00, B60W 20/00, B60K 6/44, B60K 6/48, B60K 6/52, B60W 50/00, B60K 11/02, H02K 9/19

(54) **PROCÉDÉ DE PILOTAGE D'UN DISPOSITIF DE COUPLAGE ET DE DECOUPLAGE D'UN MOTEUR ELECTRIQUE DE TRACTION EN FONCTION DE CRITERES THERMIQUES**
VERFAHREN ZUR STEUERUNG EINER VORRICHTUNG ZUR KOPPLUNG UND ENTKOPPLUNG EINES ELEKTRISCHEN ANTRIEBSMOTORS ANHAND THERMISCHER KRITERIEN
METHOD FOR CONTROLLING A DEVICE FOR COUPLING AND DECOUPLING AN ELECTRIC DRIVE MOTOR ON THE BASIS OF THERMAL CRITERIA

(30) Priorité: 29.03.2022 FR 2202813
(43) Date de publication de la demande: 05.02.2025
(73) Titulaire: Stellantis Auto SAS, 78300 Poissy (FR)
(72) Inventeur: GAUDICHON, Ludovic, 78210 SAINT CYR L'ECOLE (FR); HABBANI, Ridouane, 92600 ASNIERES SUR SEINE (FR); MICHAUT, Simon, 95870 BEZONS (FR)
(74) Mandataire: PSIP
(86) Numéro de dépôt international: PCT/FR2023/050131
(87) Numéro de publication internationale: WO 2023/187271

(56) Documents cités:
- FR-A1- 3 081 412
- US-A1- 2004 147 366
- US-B2- 7 095 196
- "8th International Conference on Compressors and their Systems", 1 January 2013, ELSEVIER, ISBN: 978-1-78-242169-6, article SUBIANTORO A. ET AL: "Performance and suitability comparisons of some R22 possible substitute refrigerants", pages: 67 - 76, XP093034161, DOI: 10.1533/9781782421702.2.67

## Description

La présente invention porte sur un procédé de pilotage d'un dispositif de couplage et de découplage d'un moteur électrique de traction en fonction de critères thermiques. L'invention trouve une application particulièrement avantageuse, mais non exclusive, avec une chaîne de traction hybride de type 4x4.

Une chaîne de traction hybride pour un véhicule automobile peut comporter au moins un organe moteur, notamment un moteur thermique et/ou un moteur électrique de traction montés sur un train de roues avant.

Un moteur électrique de traction est monté sur un train de roues arrière. Le moteur électrique de traction est associé à un réducteur de vitesse pour adapter la vitesse de rotation très élevée du moteur à la vitesse de rotation des roues du véhicule. Un dispositif de couplage et de découplage permet de sélectivement coupler ou découpler le moteur électrique de traction avec le train de roues arrière. Le pilotage du dispositif de couplage et de découplage est généralement effectué en fonction d'un critère de régime maximum du moteur électrique de traction.

Par ailleurs, un système thermique est conçu pour dissiper les pertes thermiques des composants électriques de la chaîne de traction jusqu'à un régime maximum du moteur électrique et/ou un régime de découplage. Le circuit de refroidissement des composants électriques du véhicule est interconnecté avec le circuit de climatisation du véhicule automobile. Il est ainsi possible d'utiliser le circuit de climatisation pour minimiser les dimensions globales du système de refroidissement.

Si dans la plupart des situations de vie, le refroidissement des composants électriques peut être assuré par un tel système, il est possible que dans certains cas, le système de refroidissement ne permette pas d'évacuer les calories dissipées par les composants électriques et ce même avec un fonctionnement à couple nul du moteur électrique.

En outre, l'état de la technique est connu des documents US2004147366A1, FR3081412A1, US7095196B2.

L'invention vise à remédier efficacement à cet inconvénient en proposant un procédé de pilotage d'une chaîne de traction hybride de véhicule automobile comportant:
- au moins un organe moteur monté sur un premier train de roues,
- un moteur électrique de traction monté sur un deuxième train de roues,
- une batterie à laquelle est connectée électriquement le moteur électrique de traction par l'intermédiaire d'un onduleur,
- un dispositif de couplage et de découplage du moteur électrique de traction apte à prendre un état verrouillé dans lequel le moteur électrique de traction est accouplé avec des roues du deuxième train de roues et un état déverrouillé dans lequel le moteur électrique de traction est désaccouplé par rapport aux roues du deuxième train de roues, et
- un circuit de refroidissement de la batterie ainsi que du moteur électrique de traction et/ou de l'onduleur, le circuit de refroidissement étant interconnecté avec un circuit de climatisation du véhicule automobile, et dans lequel circule un fluide de refroidissement
- ledit procédé comportant une étape de pilotage du dispositif de couplage et de découplage du moteur électrique de traction sélectivement dans l'état verrouillé ou dans l'état déverrouillé en fonction des critères thermiques suivants:
- une température du fluide caloporteur,
- une température de la batterie, et
- une capacité du circuit de refroidissement à maintenir une température cible du fluide caloporteur déterminée en fonction d'une température extérieure et d'une vitesse du véhicule automobile.

L'invention permet ainsi de maximiser l'usage du moteur électrique de traction du train arrière en fonction des conditions de fonctionnement thermiques de la chaîne de traction du véhicule automobile tout en évitant les surchauffes. L'invention présente un caractère économique, dans la mesure où elle nécessite uniquement une mise à jour logicielle pour effectuer son implémentation.

Selon une mise en œuvre de l'invention, une première cartographie définit une plage d'état de verrouillage et une plage d'état de déverrouillage du dispositif de couplage et de découplage en fonction de la température du fluide caloporteur et de la température de la batterie.

Selon une mise en œuvre de l'invention, la première cartographie comporte des plages d'hystérésis pour éviter une instabilité d'état du dispositif de couplage et de découplage du moteur électrique de traction.

Selon une mise en œuvre de l'invention, une deuxième cartographie définit une plage d'état de verrouillage et une plage d'état de déverrouillage du dispositif de couplage et de découplage en fonction de la température extérieure et de la vitesse du véhicule automobile.

Selon une mise en œuvre de l'invention, la deuxième cartographie comporte des plages d'hystérésis pour éviter une instabilité d'état du dispositif de couplage et de découplage du moteur électrique de traction.

Selon une mise en œuvre de l'invention, la première cartographie et la deuxième cartographie sont combinées entre elles par l'intermédiaire d'une porte logique de type "ET" pour élaborer une consigne de fonctionnement du dispositif de couplage et de découplage du moteur électrique de traction.

Selon une mise en œuvre de l'invention, la température du fluide caloporteur est mesurée par un capteur correspondant.

Selon une mise en œuvre de l'invention, la température de la batterie est mesurée par un capteur correspondant.

L'invention a également pour objet une chaîne de traction comportant un calculateur comprenant une mémoire stockant des instructions logicielles pour la mise en œuvre du procédé tel que précédemment défini.

Selon une réalisation de l'invention, ladite chaîne de traction comporte un moteur thermique et un premier moteur électrique de traction montés sur un train de roues avant,
- ledit premier moteur électrique de traction étant disposé en entrée d'une boîte de vitesses, et
- un embrayage de connexion et de déconnexion du moteur thermique,
- un deuxième moteur électrique de traction et un dispositif de couplage et de découplage du deuxième moteur électrique de traction étant montés sur un train de roues arrière.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'une chaîne de traction hybride d'un véhicule automobile mettant en œuvre un procédé selon l'invention de pilotage d'un dispositif de couplage et de découplage d'un moteur électrique de traction;
[Fig. 2] La figure 2 est une représentation schématique d'un système thermique composé d'un circuit de refroidissement des composants électriques de la chaîne de traction et d'un circuit de climatisation du véhicule automobile;
[Fig. 3a] La figure 3a montre une première cartographie définissant une plage d'état de verrouillage et une plage d'état de déverrouillage du dispositif de couplage et de découplage en fonction de critères thermiques pris en compte dans le procédé selon l'invention;
[Fig. 3b] La figure 3b montre une deuxième cartographie définissant une plage d'état de verrouillage et une plage d'état de déverrouillage du dispositif de couplage et de découplage en fonction de critères thermiques pris en compte dans le procédé selon l'invention;
[Fig. 4] La figure 4 est un tableau indiquant les pertes thermiques du moteur électrique de traction du train arrière en fonction de la vitesse du véhicule automobile et du rapport de vitesse engagé;
[Fig. 5] La figure 5 montre le bilan thermique obtenu avec un procédé classique de pilotage du dispositif de couplage et de découplage du moteur électrique de traction du train de roues arrière;
[Fig. 6] La figure 6 montre le bilan thermique obtenu avec un procédé selon l'invention de pilotage du dispositif de couplage et de découplage du moteur électrique de traction du train de roues arrière.

Les éléments identiques, similaires, ou analogues conservent la même référence d'une figure à l'autre.

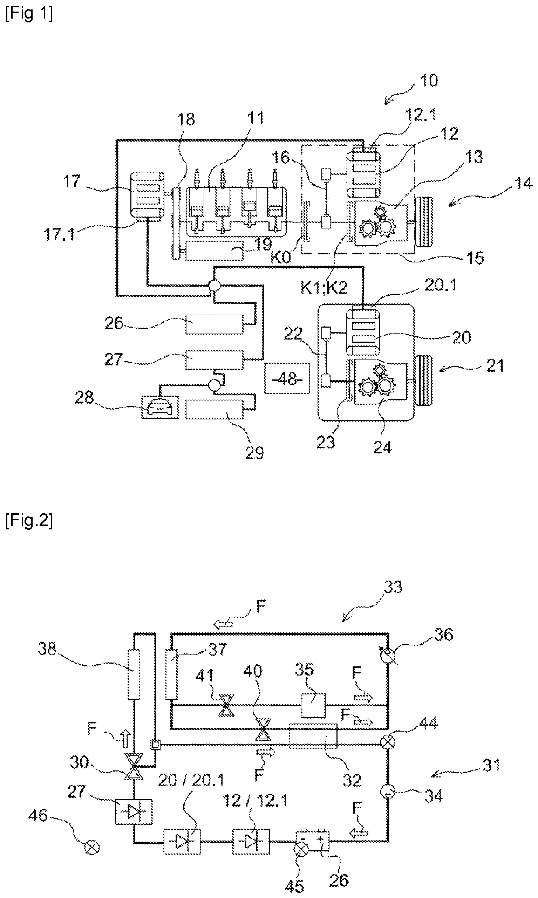

La figure 1 montre une chaîne de traction hybride 10 de véhicule automobile comportant au moins un organe moteur, tel qu'un moteur thermique 11 et un moteur électrique de traction 12 montés sur un train de roues 14, notamment un train de roues avant.

Le moteur électrique de traction 12 est disposé en entrée d'une boîte de vitesses 13 à double embrayages comportant deux embrayages K1, K2 de changement de rapport de vitesse. La boîte de vitesses 13 comporte un arbre d'entrée 13.1 et un arbre de sortie 13.2. L'arbre de sortie 13.2 de la boîte de vitesses 13 est relié aux roues par l'intermédiaire d'un différentiel et d'une descente de pont (non représentés).

En outre, un embrayage K0 de connexion et de déconnexion du moteur thermique 11 est apte à sélectivement connecter le moteur thermique 11 à l'arbre d'entrée 13.1 de la boîte de vitesses 13 lorsque ledit embrayage K0 est à l'état fermé et à isoler le moteur thermique 11 par rapport à l'arbre d'entrée 13.1 de la boîte de vitesses 13 lorsque ledit embrayage K0 est à l'état ouvert. A cet effet, l'embrayage K0 est disposé entre le moteur thermique 11 et le moteur électrique de traction 12. L'isolation du moteur thermique 11 par rapport à l'arbre d'entrée 13.1 de la boîte de vitesses et donc par rapport aux roues est requise notamment lorsque le véhicule fonctionne dans un mode de roulage électrique pur.

Le moteur électrique de traction 12 est monté entre l'embrayage K0 et les embrayages K1, K2 de changement de rapport de la boîte de vitesses 13. Le moteur électrique de traction 12 pourra être connecté sur l'arbre d'entrée 13.1 de la boîte de vitesses 13 par l'intermédiaire d'un ensemble réducteur 16 à engrenages ou à courroie.

L'ensemble formé par le moteur électrique de traction 12, la boîte de vitesses 13, ainsi que les embrayages K1, K2 de changement de rapport de vitesse, et l'embrayage K0 de connexion et de déconnexion du moteur thermique 11 pourra être intégré à l'intérieur d'un dispositif de transmission électrique 15 constituant un composant indépendant de la chaîne de traction 10.

Le moteur thermique 11 est associé à une machine électrique tournante réversible 17 dite "alterno-démarreur". L'alterno-démarreur 17 pourra être accouplé avec le moteur thermique 11 en façade accessoires par l'intermédiaire d'un dispositif de transmission à poulie et courroie 18. L'alterno-démarreur 17 pourra notamment assurer le redémarrage du moteur thermique 11 dans le cadre d'une stratégie d'arrêt et de redémarrage du moteur thermique 11 en fonction des conditions de circulation (système dit "stop and start" en anglais).

Un compresseur de climatisation 36 est également accouplé au dispositif de transmission à poulie et courroie 18.

Par ailleurs, un deuxième moteur électrique de traction 20, est monté sur un train de roues arrière 21. Le moteur électrique de traction 20 est associé à un réducteur de vitesse 22 et à un dispositif 23 de couplage et de découplage du moteur électrique de traction 20 avec les roues arrière du véhicule. Le dispositif 23 de couplage et de découplage est apte à prendre un état verrouillé dans lequel le moteur électrique de traction 20 est accouplé avec des roues du deuxième train de roues 21 et un état déverrouillé dans lequel le moteur électrique de traction 20 est désaccouplé par rapport aux roues du deuxième train de roues 21.

Le dispositif 23 de couplage et de découplage est constitué de préférence par un dispositif à crabot. Alternativement, le dispositif 23 pourra prendre la forme d'un embrayage. Le cas échéant, une boîte de vitesses 24 pourra également être intégré sur le train de roues arrière 21.

Le moteur électrique de traction 12, l'alterno-démarreur 17, ainsi que le moteur électrique de traction 20 sont connectés électriquement à une batterie 26 sur un réseau électrique haute tension. À cet effet, le moteur électrique de traction 12, l'alterno-démarreur 17, et le moteur électrique de traction 20 sont associés chacun à un onduleur correspondant 12.1, 17.1, 20.1 permettant de transformer la tension continue de la batterie en une tension alternative polyphasée alimentant la machine électrique correspondante dans un mode moteur ou inversement de transformer la tension polyphasée générée par la machine électrique correspondante en une tension continue dans un mode générateur. Le réseau électrique haute tension présente une tension de fonctionnement de 24 Volts ou de 48 Volts, voire une tension supérieure.

Un convertisseur continu-continu 27 permet de transformer la tension du réseau électrique haute tension en une basse tension notamment une tension de 12volts compatible avec un réseau électrique de bord 28 du véhicule. Ce réseau électrique de bord 28 comporte une batterie 29.

En variante, la configuration du train de roues avant 14 et du train de roues arrière 21 pourra être inversée.

La figure 2 montre un circuit de refroidissement 31, dit circuit très basse température, destiné à refroidir les composants électriques de la chaîne de traction hybride 10. Ce circuit de refroidissement 31 comporte un échangeur thermique 32 couplé à un circuit de climatisation 33 ainsi qu'une pompe pilotée 34 pour faire circuler le fluide caloporteur, en particulier un liquide caloporteur tel que de l'eau contenant de l'antigel, dans le circuit de refroidissement 31. Le fluide caloporteur est destiné à circuler à l'intérieur de la batterie 26, du convertisseur continu-continu 27, du moteur électrique de traction 12 et/ou de l'onduleur correspondant 12.1, du moteur électrique de traction 20 et/ou de l'onduleur correspondant 20.1. L'échangeur thermique 32 assure un échange thermique entre le fluide caloporteur du circuit de refroidissement 31 et le fluide réfrigérant du circuit de climatisation 33.

Une vanne trois voies 30 permet de sélectivement faire passer le fluide caloporteur dans un radiateur 38 (échangeur thermique air/fluide caloporteur) à l'avant du véhicule puis vers l'échangeur thermique 32, ou directement vers l'échangeur thermique 32.

Un capteur 44 permet de mesurer la température du fluide caloporteur T_fc circulant à l'intérieur du circuit de refroidissement 31. Un capteur 45 permet de mesurer la température T_batt de la batterie 26. Un capteur 46 permet de mesurer la température extérieure T_ext au véhicule.

Le circuit de climatisation 33 comporte un évaporateur 35 au sein duquel un fluide réfrigérant, tel que du fréon ou tout autre fluide caloporteur adapté à l'application, absorbe la chaleur de l'air de l'habitacle en changeant d'état physique, c'est-à-dire en passant totalement en phase gazeuse. En sortie de l'évaporateur 35, le gaz frigorigène circule dans les canalisations jusqu'à un compresseur 36 dans lequel il est comprimé. Le gaz frigorigène haute pression en sortie du compresseur 36 est introduit dans un condenseur 37 au sein duquel le gaz frigorigène cède sa chaleur à l'air extérieur traversant le condenseur 37 grâce à l'avancement du véhicule et/ou au fonctionnement d'un groupe moto-ventilateur. Le fluide frigorigène change alors d'état physique et repasse totalement en phase liquide.

Une vanne 40 permet d'isoler, si besoin, l'échangeur thermique 32 du reste du circuit de climatisation 33. Une vanne 41 permet d'isoler, si besoin, l'évaporateur du reste du circuit de climatisation 33.

Le sens de circulation des fluides caloporteurs à l'intérieur du circuit de refroidissement 31 des composants de la chaîne de traction et du circuit de climatisation 33 est indiqué par les flèches F.

Un calculateur 48 comporte une mémoire stockant des instructions logicielles pour la mise en œuvre d'un procédé de pilotage de la chaîne de traction hybride 10. Le calculateur 48 reçoit en entrée les valeurs retournées par les capteurs 44, 45, 46. Le calculateur 48 pilote le dispositif 23 de couplage et de découplage du moteur électrique de traction 20 sélectivement dans l'état verrouillé ou dans l'état déverrouillé en fonction des critères thermiques suivants:
- la température du fluide caloporteur T_fc,
- la température de la batterie T_batt, et
- une capacité du circuit de refroidissement à maintenir une température cible du fluide caloporteur déterminée en fonction de la température extérieure T_ext et d'une vitesse du véhicule automobile V_veh.
La température cible du fluide caloporteur est par exemple de l'ordre de 40°C. Par "de l'ordre de", on entend une variation de plus ou moins 10% par rapport à la valeur indiquée.

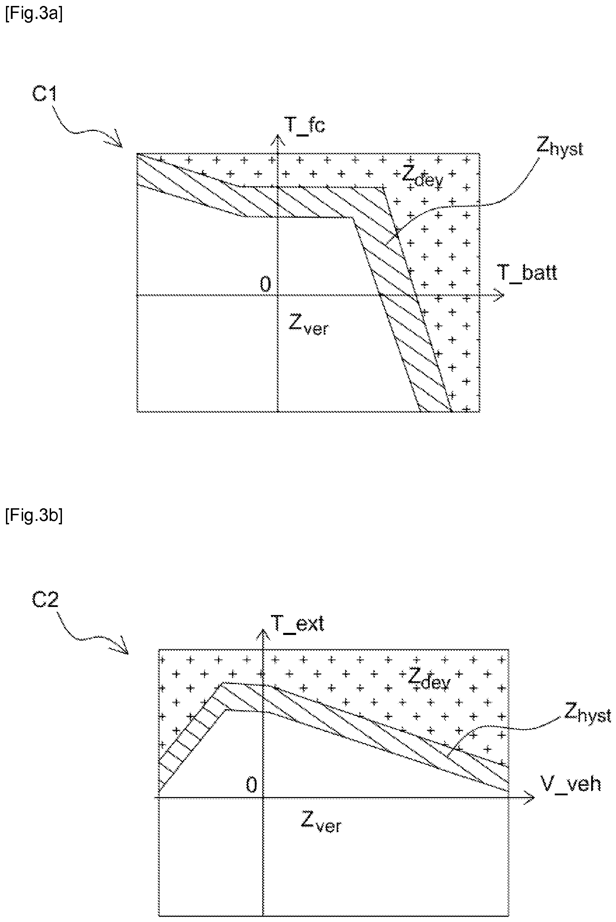

Comme cela est illustré par la figure 3a, une première cartographie C1 définit une plage d'état de verrouillage Zver et une plage d'état de déverrouillage Zdev du dispositif 23 de couplage et de découplage en fonction de la température du fluide caloporteur T_fc et de la température de la batterie T_batt.

La première cartographie C1 comporte des plages d'hystérésis Zhyst hachurées sur la figure 3a pour éviter une instabilité d'état du dispositif 23 de couplage et de découplage du moteur électrique de traction 20. Dans ces zones d'hystérésis Hhyst, deux seuils sont donc définis pour faire passer le dispositif 23 respectivement de l'état verrouillé à l'état déverrouillé et de l'état déverrouillé à l'état verrouillé.

Comme cela est illustré par la figure 3b, une deuxième cartographie C2 définit une plage d'état de verrouillage Zver et une plage d'état de déverrouillage Zdev du dispositif 23 de couplage et de découplage en fonction de la température extérieure T_ext et de la vitesse du véhicule automobile V_veh.

La deuxième cartographie C2 comporte des plages d'hystérésis Zhyst hachurées sur la figure 3b pour éviter une instabilité d'état du dispositif 23 de couplage et de découplage du moteur électrique de traction 20. Dans ces zones d'hystérésis Hhyst, deux seuils sont donc définis pour faire passer le dispositif 23 respectivement de l'état verrouillé à l'état déverrouillé et de l'état déverrouillé à l'état verrouillé.

La première cartographie C1 et la deuxième cartographie C2 sont combinées entre elles par l'intermédiaire d'une porte logique de type "ET" pour élaborer une consigne de fonctionnement du dispositif 23 de couplage et de découplage du moteur électrique de traction 20.

Ainsi, dans le cas où le fluide caloporteur est trop "chaud", c'est-à-dire qu'il dépasse une température limite de fonctionnement, le calculateur 48 réduit les pertes thermiques à évacuer en faisant passer le dispositif 23 de couplage et de découplage à l'état déverrouillé. De façon analogue, dans le cas où la batterie 26 est trop "chaude", c'est-à-dire qu'elle dépasse une température seuil, le calculateur 48 réduit les pertes thermiques à évacuer en faisant passer le dispositif 23 de couplage et de découplage à l'état déverrouillé.

Dans les deux cas, on gère une situation de vie dans laquelle le système thermique n'arrive pas à tenir correctement sa température cible pour la partie circuit de refroidissement 31 ou batterie 26. L'implémentation de la cartographie C1 peut donc être vue comme un aspect "curatif" de la problématique de refroidissement.

La prise en compte de la capacité du système thermique à produire du froid peut être vue comme un aspect "préventif" de la problématique de refroidissement. Ainsi, même si la batterie est "froide" et le fluide caloporteur "froid" mais que le véhicule roule vite avec une température extérieure T_ext importante (T_ext supérieure à un seuil qui varie en fonction de la vitesse du véhicule), alors on ne connecte pas le moteur électrique de traction 20 aux roues arrière pour éviter d'élever la température du fluide caloporteur du circuit 31 ou de la batterie 26. Il est ainsi possible de gérer au mieux, à haute température extérieure (par exemple +45°C), le confort thermique habitacle du fait que le compresseur de climatisation 36 ne peut pas alimenter correctement l'échangeur thermique 32 tout en assurant la fonction de climatisation.

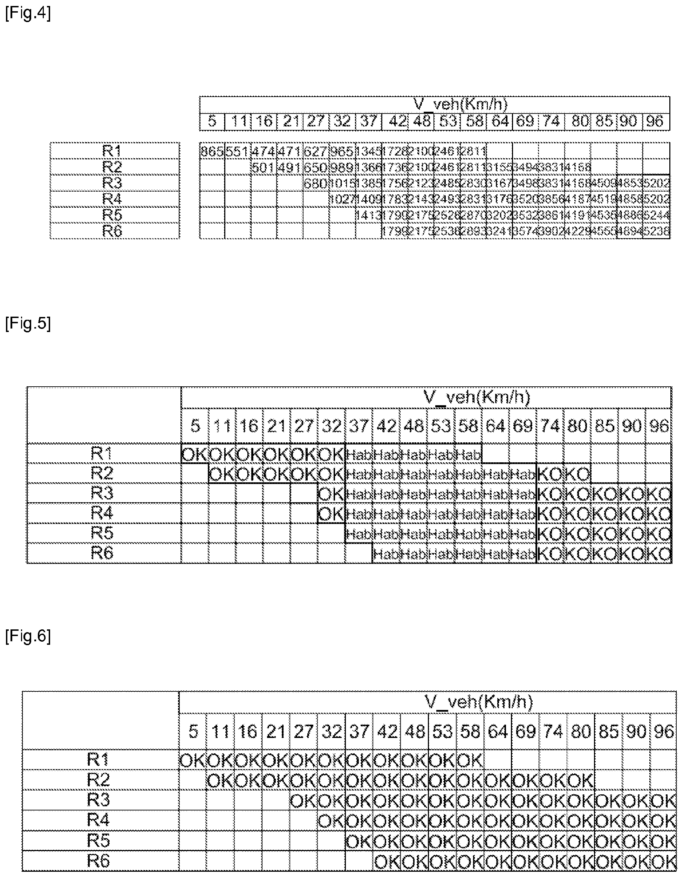

La figure 4 est un tableau indiquant les pertes thermiques du moteur électrique de traction 20 du train de roues arrière 21 en fonction de la vitesse du véhicule automobile V_veh et du rapport de vitesse engagé R1-R6 pour une boîte de vitesses de type DCT (pour "Dual Clutch Transmission"). Les pertes thermiques sont exprimées en Watts.

Dans le cadre d'un véhicule de type 4x4 ayant un moteur électrique de traction 20 ayant une tension de fonctionnement de 48V, on observe que les pertes thermique peuvent atteindre près de 4.9 kW à 90 km/h. Ces pertes thermiques sont dues au fonctionnement simultané du convertisseur continu/continu 27, de l'onduleur 20.1 et du moteur électrique 20.1, ainsi que de l'onduleur 12.1 et du moteur électrique 12.

La figure 5 montre le bilan thermique obtenu avec un procédé classique de pilotage du dispositif 23 de couplage et de découplage du moteur électrique de traction 20 du train de roues arrière 21:
- "OK" correspond à un état thermique satisfaisant du système thermique 31, 33 qui assure une évacuation des calories des composants électriques sans dégradation du confort thermique de l'habitacle;
- "Hab" correspond à un état thermique correct du système thermique 31, 33 qui assure une évacuation des calories des composants électriques avec toutefois une dégradation du confort thermique de l'habitacle, et
- "KO" correspond à un état thermique détérioré du système thermique 31, 33 qui ne peut plus évacuer correctement les calories des composants électriques de sorte que sa surchauffe induirait une immobilisation du véhicule.

Dans le cas précis de l'exemple, pour une température extérieure de +45°C, le système thermique pourrait évacuer correctement les pertes thermique sans mettre en défaut le confort thermique de l'habitacle jusqu'à 35 km/h. Au-delà de 35 km/h et jusqu'à 70 km/h, il est nécessaire de dégrader fortement le confort thermique de l'habitacle, en réduisant la puissance de froid du circuit de climatisation 33 pour envoyer le froid vers l'échangeur thermique 32.

A partir de 70 km/h, et alors même que le régime maximal du moteur électrique de traction 20 permet de maintenir le dispositif 23 à l'état verrouillé jusqu'à 96 km/h sans risque de sur-régime, il se produirait une immobilisation du véhicule car le circuit de refroidissement surchaufferait (température du fluide caloporteur supérieure à 63°C).

Comme cela est illustré par la figure 6, le pilotage du verrouillage et du déverrouillage du dispositif 23 de couplage et de découplage du moteur électrique de traction en fonction des critères thermiques précités permet de garantir un fonctionnement optimal du système thermique sur toute la plage de vitesse du véhicule ainsi que pour tous les rapports de vitesse R1-R6. Le système thermique peut dissiper correctement les pertes des organes électriques et ce sans dégradation du confort thermique de l'habitacle.

## Revendications

1. Procédé de pilotage d'une chaîne de traction hybride (10) de véhicule automobile comportant:
- au moins un organe moteur (11, 12) monté sur un premier train de roues (14),
- un moteur électrique de traction (20) monté sur un deuxième train de roues (21),
- une batterie (26) à laquelle est connectée électriquement le moteur électrique de traction (20) par l'intermédiaire d'un onduleur (20.1),
- un dispositif (23) de couplage et de découplage du moteur électrique de traction (20) apte à prendre un état verrouillé dans lequel le moteur électrique de traction (20) est accouplé avec des roues du deuxième train de roues (21) et un état déverrouillé dans lequel le moteur électrique de traction (20) est désaccouplé par rapport aux roues du deuxième train de roues (21), et
- un circuit de refroidissement (31) de la batterie (26) ainsi que du moteur électrique de traction (20) et/ou de l'onduleur (20.1), le circuit de refroidissement étant interconnecté avec un circuit de climatisation du véhicule automobile, et dans lequel circule un fluide de refroidissement,
où ledit procédé comporte une étape de pilotage du dispositif (23) de couplage et de découplage du moteur électrique de traction (20) sélectivement dans l'état verrouillé ou dans l'état déverrouillé en fonction des critères thermiques suivants:
- une température du fluide caloporteur (T_fc),
- une température de la batterie (T_batt), et
- une capacité du circuit de refroidissement à maintenir une température cible du fluide caloporteur déterminée en fonction d'une température extérieure (T_ext) et d'une vitesse du véhicule automobile (V_veh).

2. Procédé selon la revendication 1, **caractérisé en ce qu'**une première cartographie (C1) définit une plage d'état de verrouillage (Zver) et une plage d'état de déverrouillage (Zdev) du dispositif de couplage et de découplage en fonction de la température du fluide caloporteur (T_fc) et de la température de la batterie (T_batt).

3. Procédé selon la revendication 2, **caractérisé en ce que** la première cartographie (C1) comporte des plages d'hystérésis pour éviter une instabilité d'état du dispositif de couplage et de découplage du moteur électrique de traction.

4. Procédé selon la revendication 2 ou 3, **caractérisé en ce qu'**une deuxième cartographie (C2) définit une plage d'état de verrouillage (Zver) et une plage d'état de déverrouillage (Zdev) du dispositif de couplage et de découplage en fonction de la température extérieure (T_ext) et de la vitesse du véhicule automobile (V_veh).

5. Procédé selon la revendication 4, **caractérisé en ce que** la deuxième cartographie (C2) comporte des plages d'hystérésis pour éviter une instabilité d'état du dispositif de couplage et de découplage du moteur électrique de traction.

6. Procédé selon la revendication 4 ou 5, **caractérisé en ce que** la première cartographie (C1) et la deuxième cartographie (C2) sont combinées entre elles par l'intermédiaire d'une porte logique de type "ET" pour élaborer une consigne de fonctionnement du dispositif (23) de couplage et de découplage du moteur électrique de traction (20).

7. Procédé selon l'une quelconque des revendications 1 à 6, **caractérisé en ce que** la température du fluide caloporteur (T_fc) est mesurée par un capteur (44) correspondant.

8. Procédé selon l'une quelconque des revendications 1 à 7, **caractérisé en ce que** la température de la batterie (T_batt) est mesurée par un capteur (45) correspondant.

9. Chaîne de traction (10) **caractérisée en ce qu'**elle comporte un calculateur (48) comprenant une mémoire stockant des instructions logicielles pour la mise en œuvre du procédé défini selon l'une quelconque des revendications précédentes.

10. Chaîne de traction selon la revendication 9, **caractérisée en ce qu'**elle comporte un moteur thermique (11) et un premier moteur électrique de traction (12) montés sur un train de roues avant (14),
- ledit premier moteur électrique de traction (12) étant disposé en entrée d'une boîte de vitesses (13), et
- un embrayage (K0) de connexion et de déconnexion du moteur thermique (11),
- un deuxième moteur électrique de traction (20) et un dispositif (23) de couplage et de découplage du deuxième moteur électrique de traction (20) étant montés sur un train de roues arrière (21).

## Patentansprüche

1. Verfahren zum Steuern eines Hybridantriebsstrangs (10) eines Kraftfahrzeugs, umfassend:
- mindestens ein Antriebsaggregat (11, 12), das an einer ersten Radachse (14) angeordnet ist,
- einen elektrischen Traktionsmotor (20), der an einer zweiten Radachse (21) angeordnet ist,
- eine Batterie (26), mit der der elektrische Traktionsmotor (20) über einen Wechselrichter (20.1) elektrisch verbunden ist,
- eine Vorrichtung (23) zum Koppeln und Entkoppeln des elektrischen Traktionsmotors (20), die einen verriegelten Zustand, in dem der elektrische Traktionsmotor (20) mit Rädern der zweiten Radachse (21) gekoppelt ist, und einen entriegelten Zustand, in dem der elektrische Traktionsmotor (20) von den Rädern der zweiten Radachse (21) entkoppelt ist, einnehmen kann, und
- einen Kühlkreislauf (31) für die Batterie (26) sowie für den elektrischen Traktionsmotor (20) und/oder den Wechselrichter (20.1), wobei der Kühlkreislauf mit einem Klimatisierungskreislauf des Kraftfahrzeugs verbunden ist und in ihm ein Kühlfluid zirkuliert,
wobei das Verfahren einen Schritt des Steuerns der Vorrichtung (23) zum Koppeln und Entkoppeln des elektrischen Traktionsmotors (20) wahlweise in den verriegelten Zustand oder in den entriegelten Zustand in Abhängigkeit von den folgenden thermischen Kriterien umfasst:
- einer Temperatur des Wärmeträgerfluids (T_fc),
- einer Temperatur der Batterie (T_batt) und
- einer Fähigkeit des Kühlkreislaufs, eine Solltemperatur des Wärmeträgerfluids aufrechtzuerhalten, die in Abhängigkeit von einer Außentemperatur (T_ext) und einer Geschwindigkeit des Kraftfahrzeugs (V_veh) bestimmt wird.

2. Verfahren nach Anspruch 1, **dadurch gekennzeichnet, dass** ein erstes Kennfeld (C1) einen Bereich des verriegelten Zustands (Zver) und einen Bereich des entriegelten Zustands (Zdev) der Vorrichtung zum Koppeln und Entkoppeln in Abhängigkeit von der Temperatur des Wärmeträgerfluids (T_fc) und der Temperatur der Batterie (T_batt) definiert.

3. Verfahren nach Anspruch 2, **dadurch gekennzeichnet, dass** das erste Kennfeld (C1) Hysteresebereiche umfasst, um eine Instabilität des Zustands der Vorrichtung zum Koppeln und Entkoppeln des elektrischen Traktionsmotors zu vermeiden.

4. Verfahren nach Anspruch 2 oder 3, **dadurch gekennzeichnet, dass** ein zweites Kennfeld (C2) einen Bereich des verriegelten Zustands (Zver) und einen Bereich des entriegelten Zustands (Zdev) der Vorrichtung zum Koppeln und Entkoppeln in Abhängigkeit von der Außentemperatur (T_ext) und der Geschwindigkeit des Kraftfahrzeugs (V_veh) definiert.

5. Verfahren nach Anspruch 4, **dadurch gekennzeichnet, dass** das zweite Kennfeld (C2) Hysteresebereiche umfasst, um eine Instabilität des Zustands der Vorrichtung zum Koppeln und Entkoppeln des elektrischen Traktionsmotors zu vermeiden.

6. Verfahren nach Anspruch 4 oder 5, **dadurch gekennzeichnet, dass** das erste Kennfeld (C1) und das zweite Kennfeld (C2) mittels eines UND-Logikgatters miteinander kombiniert werden, um einen Betriebssollwert für die Vorrichtung (23) zum Koppeln und Entkoppeln des elektrischen Traktionsmotors (20) zu erzeugen.

7. Verfahren nach einem der Ansprüche 1 bis 6, **dadurch gekennzeichnet, dass** die Temperatur des Wärmeträgerfluids (T_fc) durch einen entsprechenden Sensor (44) gemessen wird.

8. Verfahren nach einem der Ansprüche 1 bis 7, **dadurch gekennzeichnet, dass** die Temperatur der Batterie (T_batt) durch einen entsprechenden Sensor (45) gemessen wird.

9. Antriebsstrang (10), **dadurch gekennzeichnet, dass** er ein Steuergerät (48) umfasst, das einen Speicher umfasst, in dem Softwareanweisungen zur Durchführung des nach einem der vorhergehenden Ansprüche definierten Verfahrens gespeichert sind.

10. Antriebsstrang nach Anspruch 9, **dadurch gekennzeichnet, dass** er einen Verbrennungsmotor (11) und einen ersten elektrischen Traktionsmotor (12) umfasst, die an einer Vorderradachse (14) angeordnet sind,
- wobei der erste elektrische Traktionsmotor (12) am Eingang eines Getriebes (13) angeordnet ist, und
- eine Kupplung (K0) zum Verbinden und Trennen des Verbrennungsmotors (11),
- wobei ein zweiter elektrischer Traktionsmotor (20) und eine Vorrichtung (23) zum Koppeln und Entkoppeln des zweiten elektrischen Traktionsmotors (20) an einer Hinterradachse (21) angeordnet sind.

## Claims

1. A method of controlling a hybrid drive train (10) of a motor vehicle comprising:
- at least one drive unit (11, 12) which is arranged on a first wheel axle (14),
- an electric traction motor (20) arranged on a second wheel axle (21),
- a battery (26) to which the electric traction motor (20) is electrically connected via an inverter (20.1),
- a device (23) for coupling and decoupling the electric traction motor (20), which a locked state, in which the electric traction motor (20) with wheels of the second wheel axle (21) is coupled, and an unlocked state, in which the electric traction motor (20) from the wheels of the second wheel axle (21) is decoupled, can assume, and
- a cooling circuit (31) for the battery (26) and for the electric traction motor (20) and/or the inverter (20.1), the cooling circuit being connected to an air-conditioning circuit of the motor vehicle and a cooling fluid circulating in it,
wherein the method comprises a step of controlling the device (23) for coupling and decoupling the electric traction motor (20) selectively in the locked state or in the unlocked state depending on the following thermal criteria:
- a heat transfer fluid temperature (T_fc),
- a temperature of the battery (T_batt), and
- a capacity of the cooling circuit to maintain a set temperature of the heat transfer fluid, determined as a function of an outside temperature (T_ext) and a speed of the motor vehicle (V_veh).

2. Method according to Claim 1, **characterized in that** a first characteristic map (C1) defines a region of the locked state (Zver) and a region of the unlocked state (Zdev) of the coupling and decoupling device as a function of the temperature of the heat-transfer fluid (T_fc) and of the temperature of the battery (T_batt).

3. Method according to Claim 2, **characterized in that** the first characteristic diagram (C1) comprises hysteresis regions in order to avoid instability of the state of the device for coupling and decoupling the electric traction motor.

4. Method according to Claim 2 or 3, **characterized in that** a second characteristic diagram (C2) defines a region of the locked state (Zver) and a region of the unlocked state (Zdev) of the coupling and decoupling device as a function of the outside temperature (T_ext) and the speed of the motor vehicle (V_veh).

5. Method according to Claim 4, **characterized in that** the second characteristic diagram (C2) comprises hysteresis regions in order to avoid instability of the state of the device for coupling and decoupling the electric traction motor.

6. Method according to Claim 4 or 5, **characterized in that** the first characteristic map (C1) and the second characteristic map (C2) are combined with one another by means of an AND logic gate in order to generate an operating setpoint value for the device (23) for coupling and decoupling the electric traction motor (20).

7. Method according to one of Claims 1 to 6, **characterized in that** the temperature of the heat-transfer fluid (T_fc) is measured by a corresponding sensor (44).

8. Method according to one of Claims 1 to 7, **characterized in that** the temperature of the battery (T_batt) is measured by a corresponding sensor (45).

9. Drive train (10), **characterized in that** it comprises a control unit (48) comprising a memory in which are stored software instructions for carrying out the method defined according to any one of the preceding claims.

10. Drive train according to Claim 9, **characterized in that** it comprises an internal combustion engine (11) and a first electric traction motor (12) arranged on a front wheel axle (14),
- wherein the first electric traction motor (12) is arranged at the input of a transmission (13), and
- a coupling (K0) for connecting and disconnecting the internal combustion engine (11),
- wherein a second electric traction motor (20) and a device (23) for coupling and decoupling of the second electric traction motor (20) on a rear wheel axle (21) are arranged.
